# EUROPÄISCHE PATENTANMELDUNG

(11) **EP 4 250 450 A1**
(43) Veröffentlichungstag der Anmeldung: **27.09.2023**
(21) Anmeldenummer: 22163822.4
(22) Anmeldetag: 23.03.2022
(51) Int. Cl.: H01M 50/213, H01M 50/242, H01M 50/247

(54) **AKKUPACK, SYSTEM AUFWEISEND DEN AKKUPACK UND EIN ELEKTRISCH ANGETRIEBENES BEARBEITUNGSGERÄT UND VERFAHREN ZUR HERSTELLUNG DES AKKUPACKS**

(71) Anmelder: Andreas Stihl AG & Co. KG, 71336 Waiblingen (DE)
(72) Erfinder: KOLLER, Torsten, 70771 Leinfelden-Echterdingen (DE); PICKHARDT, Moritz, 24113 Kiel (DE)
(74) Vertreter: Patentanwälte Ruff, Wilhelm, Beier, Dauster & Partner mbB

(57) **Zusammenfassung**

Die Erfindung bezieht sich auf einen Akkupack (1), wobei der Akkupack (1) aufweist:
- mehrere Packleistungskontakte (2a, 2b), wobei die Packleistungskontakte (2a, 2b) mit Berührungsstellen (2aB, 2bB) zur benutzerlösbaren Berührung von Geräteleistungskontakten (3a, 3b) eines elektrisch angetriebenen Bearbeitungsgeräts (4) zur Versorgung des Bearbeitungsgeräts (4) mit elektrischer Antriebsleistung (AL) von dem Akkupack (1) ausgebildet sind, und
- ein Packgehäuse (5), wobei das Packgehäuse (5) mindestens eine Flammschutz-Gehäusekomponente (6) und mindestens eine Aufprallschutz-Gehäusekomponente (7) aufweist,
- wobei die mindestens eine Flammschutz-Gehäusekomponente (6) mindestens ein Flammschutz-Material (6M) zum Flammschutz des Akkupacks (1) aufweist,
- wobei die mindestens eine Aufprallschutz-Gehäusekomponente (7) mindestens ein von dem Flammschutz-Material (6M) verschiedenes Aufprallschutz-Material (7M) zum Aufprallschutz des Akkupacks (1) aufweist, und
- wobei die Berührungsstellen (2aB, 2bB) im Bereich der mindestens einen Flammschutz-Gehäusekomponente (6) und nicht der mindestens einen Aufprallschutz-Gehäusekomponente (7) angeordnet sind.

## Beschreibung

### ANWENDUNGSGEBIET UND STAND DER TECHNIK

Die Erfindung bezieht sich auf einen Akkupack, ein System aufweisend den Akkupack und ein elektrisch angetriebenes Bearbeitungsgerät und ein Verfahren zur Herstellung des Akkupacks.

### AUFGABE UND LÖSUNG

Der Erfindung liegt als Aufgabe die Bereitstellung eines Akkupacks, eines Systems aufweisend den Akkupack und ein elektrisch angetriebenes Bearbeitungsgerät und eines Verfahrens zur Herstellung des Akkupacks zugrunde, das jeweils verbesserte Eigenschaften aufweist.

Die Erfindung löst diese Aufgabe durch die Bereitstellung eines Akkupacks und eines Verfahrens zur Herstellung des Akkupacks beschrieben in den unabhängigen Ansprüchen. Vorteilhafte Weiterbildungen und/oder Ausgestaltungen der Erfindung, insbesondere eines Systems aufweisend den Akkupack und ein elektrisch angetriebenes Bearbeitungsgerät, sind in den abhängigen Ansprüchen beschrieben.

Der erfindungsgemäße Akkupack (Englisch: battery pack) weist mehrere Packleistungskontakte und ein Packgehäuse auf. Die Packleistungskontakte sind mit, insbesondere jeweiligen, Berührungsstellen zur benutzerlösbaren Berührung (Englisch: touching) von Geräteleistungskontakten eines elektrisch angetriebenen Bearbeitungsgeräts zur Versorgung des, insbesondere berührten, Bearbeitungsgeräts mit elektrischer Antriebsleistung von dem Akkupack ausgebildet. Das Packgehäuse weist mindestens eine Flammschutz-Gehäusekomponente und mindestens eine Aufprallschutz-Gehäusekomponente auf. Die mindestens eine Flammschutz-Gehäusekomponente weist mindestens ein Flammschutz-Material zum Flammschutz des Akkupacks auf. Die mindestens eine Aufprallschutz-Gehäusekomponente weist mindestens ein von dem Flammschutz-Material verschiedenes Aufprallschutz-Material zum Aufprallschutz des Akkupacks auf. Die Berührungsstellen, insbesondere die Packleistungskontakte, sind, insbesondere jeweils und/oder vollständig, im Bereich der mindestens einen Flammschutz-Gehäusekomponente und nicht, insbesondere im Bereich, der mindestens einen Aufprallschutz-Gehäusekomponente angeordnet.

Dies ermöglicht, insbesondere die mindestens eine Flammschutz-Gehäusekomponente und die Anordnung der Berührungsstellen im Bereich der mindestens einen Flammschutz-Gehäusekomponente und nicht der mindestens einen Aufprallschutz-Gehäusekomponente ermöglichen, einen Flammschutz des Akkupacks. Zusätzlich ermöglicht dies, insbesondere die mindestens eine Aufprallschutz-Gehäusekomponente, einen Aufprallschutz des Akkupacks. Somit ermöglicht dies eine Mehrfunktion des Packgehäuses und/oder, insbesondere somit, einen verbesserten Schutz des Akkupacks.

Insbesondere können/kann der Akkupack und/oder das Bearbeitungsgerät mobil bzw. portabel sein. Insbesondere kann mobil eine Masse von maximal 50 kg (Kilogramm), insbesondere maximal 20 kg, insbesondere maximal 10 kg, insbesondere maximal 5 kg, und/oder minimal 0,25 kg, insbesondere minimal 0,5 kg, insbesondere minimal 1 kg, insbesondere minimal 2 kg, bedeuten.

Das Bearbeitungsgerät kann boden- und/oder handgeführt, insbesondere handgetragen, und/oder ein Garten-, Forst-, Boden- und/oder Baubearbeitungsgerät sein. Insbesondere kann das Bearbeitungsgerät eine Säge, insbesondere eine Kettensäge, oder ein Hoch-Entaster, oder eine Heckenschere, oder ein Heckenschneider, oder ein Gehölzschneider, oder eine Astschere, ein Trennschleifer, oder ein Blasgerät, oder ein Laubbläser, oder ein Sauggerät, oder ein Laubsauger, oder ein Reinigungsgerät, oder ein Hochdruckreiniger, oder ein Kehrgerät, oder eine Kehrwalze, oder eine Kehrbürste, oder ein Rasenmäher, oder eine Grasschere, oder ein Freischneider, oder ein Vertikutierer sein. Zusätzlich oder alternativ kann das Bearbeitungsgerät ein Bearbeitungswerkzeug und/oder einen, insbesondere elektrischen, Antriebsmotor, insbesondere zum Antrieb des Bearbeitungswerkzeugs, aufweisen. Insbesondere kann die Antriebsleistung für den Antriebsmotor sein.

Der Akkupack kann zur, insbesondere werkzeugfrei und/oder zerstörungsfrei, benutzerlösbaren mechanischen Verbindung mit dem Bearbeitungsgerät und/oder benutzeraustauschbar bzw. benutzerentnehmbar ausgebildet sein, insbesondere von bzw. aus dem Bearbeitungsgerät. Insbesondere kann der Akkupack zum Tragen durch das Bearbeitungsgerät ausgebildet sein. Zusätzlich oder alternativ kann das Bearbeitungsgerät einen Akkuschacht aufweisen, wobei der Akkuschacht zur Aufnahme des Akkupacks ausgebildet sein kann.

Der Begriff "konfiguriert" kann für den Begriff "ausgebildet" synonym verwendet werden.

Der Begriff "umfasst" oder "hat" kann für den Begriff "aufweist" synonym verwendet werden.

Der Begriffsbestandteil "Klemme" oder "Anschluss" oder "Terminal" kann für den Begriffsbestandteil "Kontakt" synonym verwendet werden.

Die Packleistungskontakte können benutzerlösbar und/oder elektrisch sein.

Die Berührung kann werkzeugfrei und/oder zerstörungsfrei benutzerlösbar und/oder zur elektrischen Verbindung und/oder unmittelbar sein. Zusätzlich oder alternativ kann der Begriff "Kontaktierung" (Englisch: contacting) für den Begriff "Berührung" synonym verwendet werden.

Die Geräteleistungskontakte können komplementär bzw. korrespondierend sein.

Die Versorgung kann automatisch sein.

Das Packgehäuse kann ein Außenpackgehäuse sein.

Der Begriffsbestandteil "Brand" kann für den Begriffsbestandteil "Flamm" synonym verwendet werden.

Der Begriffsbestandteil "Teil" kann für den Begriffsbestandteil "Komponente" synonym verwendet werden.

Die mindestens eine Aufprallschutz-Gehäusekomponente kann von der mindestens einen Flammschutz-Gehäusekomponente verschieden, insbesondere materialverschieden, und/oder, insbesondere scharf bzw. streng, getrennt sein.

Der Begriffsbestandteil "Schlag" oder "Fall" kann für den Begriffsbestandteil "Aufprall" synonym verwendet werden.

Der Begriffsbestandteil "Werkstoff" kann für den Begriffsbestandteil "Material" synonym verwendet werden.

Die mindestens eine Flammschutz-Gehäusekomponente kann mit dem mindestens einen Flammschutz-Material zum Flammschutz des Akkupacks ausgebildet sein. Zusätzlich oder alternativ braucht oder kann die mindestens eine Flammschutz-Gehäusekomponente mit dem mindestens einen Flammschutz-Material nicht so gut wie die mindestens eine Aufprallschutz-Gehäusekomponente mit dem mindestens einen Aufprallschutz-Material oder nicht zum Aufprallschutz des Akkupacks ausgebildet sein.

Die mindestens eine Aufprallschutz-Gehäusekomponente kann mit dem mindestens einen Aufprallschutz-Material zum Aufprallschutz des Akkupacks ausgebildet sein. Zusätzlich oder alternativ braucht oder kann die mindestens eine Aufprallschutz-Gehäusekomponente mit dem mindestens einen Aufprallschutz-Material nicht so gut wie die mindestens eine Flammschutz-Gehäusekomponente mit dem mindestens einen Flammschutz-Material oder nicht zum Flammschutz des Akkupacks ausgebildet sein.

Die Packleistungskontakte können in und/oder an dem Packgehäuse, insbesondere einem Rand des Packgehäuses, angeordnet sein.

Angeordnet kann räumlich und/oder fest, insbesondere ortsfest, angeordnet, insbesondere befestigt, sein. Zusätzlich oder alternativ kann der Begriff "positioniert" für den Begriff "angeordnet" synonym verwendet werden.

Der Akkupack kann mehrere Akkumulatorzellen aufweisen. Insbesondere können die Akkumulatorzellen in dem Packgehäuse angeordnet sein. Zusätzlich oder alternativ können die Akkumulatorzellen jeweils einzelne wieder aufladbare Speicherelemente für elektrische Energie auf elektrochemischer Basis sein. Weiter zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann eine, insbesondere jeweilige, Zell-Spannung, insbesondere Zell-Nennspannung, einer, insbesondere jeweiligen, der Akkumulatorzellen minimal 2 V (Volt), insbesondere minimal 3,6 V, und/oder maximal 5 V, insbesondere maximal 4,2 V, sein. Weiter zusätzlich oder alternativ können die Akkumulatorzellen Rundzellen, prismatische Zellen oder Pouchzellen sein.

In einer Weiterbildung der Erfindung sind die Packleistungskontakte Steckverbinder, insbesondere Tulpen bzw. Buchsen. Insbesondere definieren die Tulpen die Berührungsstellen. Dies ermöglicht eine einfache und/oder zuverlässige Herstellung und/oder Lösung der Berührung, insbesondere der elektrischen Verbindung. Insbesondere können die Geräteleistungskontakte Steckverbinder, insbesondere Schwerter bzw. Stifte, sein, insbesondere welche in die Tulpen geschoben werden können.

In einer Weiterbildung der Erfindung weist die mindestens eine Flammschutz-Gehäusekomponente mindestens eine Durchführungsaussparung bzw. -öffnung, insbesondere Schlitze, zur Durchführung der Packleistungskontakte und/oder der Geräteleistungskontakte zur, insbesondere zu der, Berührung auf. Insbesondere sind die Berührungsstellen, insbesondere die Packleistungskontakte und/oder vollständig, in dem Packgehäuse hinter der mindestens einen Durchführungsaussparung angeordnet, insbesondere in einer, insbesondere axialen, Richtung von außen nach innen. Dies ermöglicht eine Zugänglichkeit von außen zu den Berührungsstellen, insbesondere den Packleistungskontakten.

In einer Weiterbildung der Erfindung ist mindestens ein kleinster Abstand entlang einer Oberfläche des Packgehäuses, insbesondere in radialen Richtungen, von den Berührungsstellen, insbesondere den Packleistungskontakten, zu der mindestens einen Aufprallschutz-Gehäusekomponente größer als zu der mindestens einen Flammschutz-Gehäusekomponente. Insbesondere sind die Berührungsstellen, insbesondere die Packleistungskontakte, insbesondere vollständig, umgeben durch die mindestens eine Flammschutz-Gehäusekomponente angeordnet, insbesondere in den radialen Richtungen. Zusätzlich oder alternativ ist die mindestens eine Flammschutz-Gehäusekomponente, insbesondere vollständig, umgeben durch die mindestens eine Aufprallschutz-Gehäusekomponente angeordnet, insbesondere in den radialen Richtungen. Mit anderen Worten: Die mindestens eine Flammschutz-Gehäusekomponente kann zwischen den Berührungsstellen, insbesondere den Packleistungskontakten, und der mindestens einen Aufprallschutz-Gehäusekomponente angeordnet sein, insbesondere in den radialen Richtungen. Dies ermöglicht die Anordnung der Berührungsstellen, insbesondere der Packleistungskontakte, im Bereich der mindestens einen Flammschutz-Gehäusekomponente und nicht der mindestens einen Aufprallschutz-Gehäusekomponente. Insbesondere kann die Oberfläche eine nächste Oberfläche und/oder eine Außenoberfläche sein. Zusätzlich oder alternativ kann der Begriff "umfasst" oder "umschlossen" für den Begriff "umgeben" synonym verwendet werden.

In einer Weiterbildung der Erfindung sind die Berührungsstellen, insbesondere vollständig, maximal mit einem Abstandsgrenzwert beabstandet zu der mindestens einen Flammschutz-Gehäusekomponente angeordnet, insbesondere in einer beliebigen Richtung. Zusätzlich oder alternativ sind die Berührungsstellen, insbesondere vollständig, minimal mit mehr als einem, insbesondere dem, Abstandsgrenzwert beabstandet zu der mindestens einen Aufprallschutz-Gehäusekomponente angeordnet, insbesondere in einer beliebigen Richtung. Insbesondere ist der Abstandsgrenzwert minimal 1 mm (Millimeter) und/oder maximal 5 mm, insbesondere 3 mm. Dies ermöglicht die Anordnung der Berührungsstellen, insbesondere der Packleistungskontakte, im Bereich der mindestens einen Flammschutz-Gehäusekomponente und nicht der mindestens einen Aufprallschutz-Gehäusekomponente.

In einer Weiterbildung der Erfindung erstreckt die mindestens eine Flammschutz-Gehäusekomponente, insbesondere mindestens eine Wandung der mindestens einen Flammschutz-Gehäusekomponente, sich, insbesondere von einem Innenraum des Packgehäuses, bis zu einer Oberfläche des Packgehäuses, insbesondere entgegen einer, insbesondere axialen, Richtung von innen nach außen. Dies ermöglicht eine einfache und/oder, insbesondere somit, kostengünstige Herstellung des Packgehäuses und somit des Akkupacks. Insbesondere kann die Oberfläche eine Außenoberfläche sein.

Zusätzlich oder alternativ kann die mindestens eine Flammschutz-Gehäusekomponente sich entlang einer, insbesondere der, Oberfläche des Packgehäuses, insbesondere in radialen Richtungen, von den Berührungsstellen ausgehend minimal 1 mm und/oder maximal 50 mm, insbesondere maximal 20 mm, insbesondere maximal 10 mm, insbesondere 3 mm, erstrecken.

In einer Weiterbildung der Erfindung weist das Packgehäuse, insbesondere die mindestens eine Aufprallschutz-Gehäusekomponente, mindestens eine Kante und/oder mindestens eine Ecke, insbesondere die Form eines Parallelepipeds, insbesondere eines Quaders, auf. Die mindestens eine Flammschutz-Gehäusekomponente erstreckt sich nicht bis zu der mindestens einen Kante und/oder der mindestens einen Ecke, insbesondere entlang einer Oberfläche des Packgehäuses, insbesondere in radialen Richtungen. Dies ermöglicht, dass die mindestens eine Flammschutz-Gehäusekomponente weniger oder nicht zum Aufprallschutz des Akkupacks beitragen braucht und/oder die mindestens eine Aufprallschutz-Gehäusekomponente mehr oder vollständig zum Aufprallschutz des Akkupacks beitragen kann. Insbesondere kann die mindestens eine Kante und/oder die mindestens eine Ecke abgerundet sein. Zusätzlich oder alternativ kann die mindestens eine Flammschutz-Gehäusekomponente, insbesondere vollständig, minimal 1 mm, insbesondere minimal 3 mm, insbesondere minimal 5 mm, beabstandet zu der mindestens einen Kante und/oder der mindestens einen Ecke angeordnet sein. Weiter zusätzlich oder alternativ kann die Oberfläche eine Außenoberfläche sein.

In einer Weiterbildung der Erfindung weist die mindestens eine Flammschutz-Gehäusekomponente eine Klassifizierung von, insbesondere mindestens, UL94V-0 auf. Dies ermöglicht einen besonders guten Flammschutz des Akkupacks. Insbesondere braucht oder kann die mindestens eine Aufprallschutz-Gehäusekomponente nicht die Klassifizierung von UL94V-0 aufweisen bzw. erreichen. Im Übrigen wird zu der Klassifizierung, insbesondere von UL94V-0, auf die Fachliteratur verwiesen.

In einer Weiterbildung der Erfindung besteht die mindestens eine Flammschutz-Gehäusekomponente teilweise, insbesondere größtenteils, oder vollständig aus Kunststoff, insbesondere PA6/6 (GFO bis 45), mit mindestens einem Flammschutz-Additiv. Zusätzlich oder alternativ besteht die mindestens eine Aufprallschutz-Gehäusekomponente teilweise, insbesondere größtenteils, oder vollständig aus, insbesondere dem, Kunststoff mit weniger oder keinem Flammschutz-Additiv. Dies, insbesondere das mindestens eine Flammschutz-Additiv, ermöglicht den Flammschutz des Akkupacks durch die mindestens eine Flammschutz-Gehäusekomponente, insbesondere aber damit auch eine Sprödigkeit der mindestens einen Flammschutz-Gehäusekomponente und somit weniger oder keinen Aufprallschutz des Akkupacks durch die mindestens eine Flammschutz-Gehäusekomponente. Zusätzlich oder alternativ ermöglicht dies, insbesondere weniger oder kein Flammschutz-Additiv, weniger oder keine Sprödigkeit der mindestens einen Aufprallschutz-Gehäusekomponente und somit den Aufprallschutz des Akkupacks durch die mindestens eine Aufprallschutz-Gehäusekomponente, aber damit auch weniger oder keinen Flammschutz des Akkupacks durch die mindestens eine Aufprallschutz-Gehäusekomponente. Insbesondere kann größtenteils mehr als 50 % bedeuten. Zusätzlich oder alternativ kann der Begriff "Plastik" für den Begriff "Kunststoff" synonym verwendet werden. Im Übrigen wird zu dem mindestens einen Flammschutz-Material und/oder dem mindestens einen Aufprallschutz-Material, insbesondere dem Kunststoff und/oder dem mindestens einen Flammschutz-Additiv, auf die Fachliteratur verwiesen.

Insbesondere können die mindestens eine Flammschutz-Gehäusekomponente und die mindestens eine Aufprallschutz-Gehäusekomponente miteinander mechanisch verbunden sein, insbesondere durch Einrasten und/oder Verschrauben.

In einer Weiterbildung der Erfindung weist die mindestens eine Aufprallschutz-Gehäusekomponente mindestens eine Aufnahmeaussparung bzw. -öffnung zur Aufnahme, und insbesondere zur formschlüssigen Verbindung, der mindestens einen Flammschutz-Gehäusekomponente auf, insbesondere entgegen einer, insbesondere axialen, Richtung von innen nach außen. Alternativ sind die mindestens eine Flammschutz-Gehäusekomponente und die mindestens eine Aufprallschutz-Gehäusekomponente Mehrkomponenten-Spritzgieß-Komponenten, und insbesondere stoffschlüssig verbunden. Dies ermöglicht eine einfache und/oder, insbesondere somit, kostengünstige Herstellung des Packgehäuses und somit des Akkupacks. Insbesondere kann die mindestens einen Flammschutz-Gehäusekomponente an der mindestens einen Aufprallschutz-Gehäusekomponente liegen, insbesondere unmittelbar. Zusätzlich oder alternativ kann der Begriffsbestandteil "Guss" für den Begriffsbestandteil "Gieß" synonym verwendet werden. Weiter zusätzlich oder alternativ kann das Mehrkomponenten-Spritzgießen ein Mehrkomponenten-Direkt-Spritzgießen und/oder mittels eines Drehtellers und/oder ein Mehrkomponenten-Umgießen bzw. -Rückgießen und/oder ein Mehrkomponenten-Einlege-Spritzgießen und/oder durch einen Einleger und/oder ein Kunststoff-Spritzgießen sein.

In einer Weiterbildung der Erfindung weist der Akkupack mindestens einen Träger, insbesondere eine Leiterplatte, auf. Der mindestens eine Träger trägt die Packleistungskontakte, insbesondere unmittelbar. Insbesondere weist der mindestens eine Träger mindestens ein, insbesondere das, Flammschutz-Material zum Flammschutz des Akkupacks auf und/oder ist verschieden von dem Packgehäuse und/oder ist in dem Packgehäuse angeordnet und/oder ist mit dem Packgehäuse formschlüssig verbunden, insbesondere unmittelbar. Dies ermöglicht die Anordnung der Packleistungskontakte in Bezug auf das Packleistungsgehäuse mittelbar, insbesondere eine mechanische Verbindung der Packleistungskontakte mit dem Packgehäuse mittelbar. Insbesondere kann die Leiterplatte starr bzw. unflexibel oder flexibel sein. Insbesondere kann für den Begriff "flexible Leiterplatte" der Begriff "Leiterfolie" synonym verwendet werden. Zusätzlich oder alternativ kann der mindestens eine Träger mit dem mindestens einen Flammschutz-Material zum Flammschutz des Akkupacks ausgebildet sein. Weiter zusätzlich oder alternativ kann der mindestens eine Träger an dem Packgehäuse liegen, insbesondere unmittelbar.

In einer Weiterbildung der Erfindung ist der Akkupack zu der Versorgung mit einem maximalen Antriebs- bzw. Nennstrom von minimal 200 mA (Milliampere), insbesondere minimal 1 A (Ampere), und/oder maximal 1000 A, insbesondere maximal 200 A, insbesondere 55 A, ausgebildet. Zusätzlich oder alternativ ist der Akkupack zu der Versorgung mit einer Nennspannung von minimal 9 V, insbesondere minimal 18V, und/oder maximal 100 V, insbesondere maximal 72 V, insbesondere 36 V, ausgebildet. Weiter zusätzlich oder alternativ ist der Akkupack zu der Versorgung mit einer maximalen elektrischen Antriebsleistung von minimal 200 W (Watt), insbesondere minimal 1 kW (Kilowatt), und/oder maximal 10 kW, insbesondere maximal 5 kW, insbesondere 2 kW, ausgebildet. Für solch große Werte ist der Flammschutz des Akkupacks besonders vorteilhaft.

In einer Weiterbildung der Erfindung weist der Akkupack mindestens einen Packdatenkontakt auf. Der mindestens eine Packdatenkontakt ist mit mindestens einer Datenberührungsstelle zur benutzerlösbaren Berührung von mindestens einem Gerätedatenkontakt des, insbesondere berührten, Bearbeitungsgeräts zur Datenübertragung zwischen dem Bearbeitungsgerät und dem Akkupack ausgebildet. Insbesondere ist die mindestens eine Datenberührungsstelle, insbesondere der mindestens eine Packdatenkontakt und/oder vollständig, im Bereich der mindestens einen Aufprallschutz-Gehäusekomponente und nicht, insbesondere im Bereich, der mindestens einen Flammschutz-Gehäusekomponente angeordnet. Dies ermöglicht die mindestens eine Flammschutz-Gehäusekomponente klein haben zu können und/oder, insbesondere somit, die mindestens eine Aufprallschutz-Gehäusekomponente groß haben zu können. Zusätzlich oder alternativ ermöglicht dies eine Trennung der Versorgung und der Datenübertragung voneinander. Insbesondere kann der mindestens eine Packdatenkontakt von den Packleistungskontakten verschieden und/oder getrennt sein. Zusätzlich oder alternativ kann der mindestens eine Packdatenkontakt benutzerlösbar und/oder elektrisch sein. Weiter zusätzlich oder alternativ kann der mindestens eine Gerätedatenkontakt komplementär bzw. korrespondierend sein. Weiter zusätzlich oder alternativ kann die Datenübertragung automatisch sein. Weiter zusätzlich oder alternativ kann die Datenübertragung eine Übertagung von Daten bzw. Informationen über die Akkumulatorzellen sein. Weiter zusätzlich oder alternativ kann der mindestens eine Packdatenkontakt in und/oder an dem Packgehäuse, insbesondere einem Rand des Packgehäuses, angeordnet sein. Weiter zusätzlich oder alternativ kann der mindestens eine Packdatenkontakt ein Steckverbinder, insbesondere eine Tulpe bzw. eine Buchse, sein. Insbesondere kann die Tulpe die Datenberührungsstelle definieren. Weiter zusätzlich oder alternativ kann der mindestens eine Gerätedatenkontakt ein Steckverbinder, insbesondere ein Schwert bzw. ein Stift, sein, insbesondere welcher in die Tulpe geschoben werden kann. Weiter zusätzlich oder alternativ kann die mindestens eine Aufprallschutz-Gehäusekomponente mindestens eine Durchführungsaussparung bzw. -öffnung, insbesondere einen Schlitz, zur Durchführung des mindestens einen Packdatenkontakts und/oder des mindestens einen Gerätedatenkontakts zur, insbesondere zu der, Berührung aufweisen. Insbesondere kann die Datenberührungsstelle, insbesondere der Packdatenkontakt und/oder vollständig, in dem Packgehäuse hinter der mindestens einen Durchführungsaussparung angeordnet sein, insbesondere in einer, insbesondere axialen, Richtung von außen nach innen. Weiter zusätzlich oder alternativ kann der mindestens eine Träger den mindestens einen Packdatenkontakt tragen, insbesondere unmittelbar.

Das erfindungsgemäße System weist den Akkupack wie vorhergehend genannt und das elektrisch angetriebene Bearbeitungsgerät auf.

Das erfindungsgemäße Verfahren zur Herstellung des Akkupacks wie vorhergehend genannt weist die Schritte auf:
- Herstellen der mindestens einen Flammschutz-Gehäusekomponente und der mindestens einen Aufprallschutz-Gehäusekomponente, insbesondere mittels Spritzgießens, insbesondere Mehrkomponenten-Spritzgießens, und
- Anordnen der Berührungsstellen im Bereich der mindestens einen Flammschutz-Gehäusekomponente und nicht der mindestens einen Aufprallschutz-Gehäusekomponente, insbesondere zeitlich danach.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines, insbesondere offenen bzw. nicht verschlossenen, Packgehäuses eines erfindungsgemäßen Akkupacks,
- Fig. 2: eine Perspektivansicht einer Explosionsdarstellung des Packgehäuses der Fig. 1 aufweisend mindestens eine Flammschutz-Gehäusekomponente und mindestens eine Aufprallschutz-Gehäusekomponente,
- Fig. 3: eine Hinter- bzw. Rückansicht des Packgehäuses der Fig. 1,
- Fig. 4: eine Vorderansicht des Packgehäuses der Fig. 1,
- Fig. 5: eine geschnittene Seitenansicht des Packgehäuses der Fig. 1,
- Fig. 6: eine geschnittene Draufsicht des Packgehäuses der Fig. 1,
- Fig. 7: eine geschnittene Draufsicht eines Systems aufweisend den Akkupack aufweisend das Packgehäuse der Fig. 1 nicht offen bzw. verschlossen und ein elektrisch angetriebenes Bearbeitungsgerät,
- Fig. 8: eine Rück- bzw. Hinteransicht des Akkupacks der Fig. 7, und
- Fig. 9: eine Perspektivansicht des Systems der Fig. 7.

### DETAILLIERTE BESCHREIBUNG DER AUSFÜHRUNGSBEISPIELE

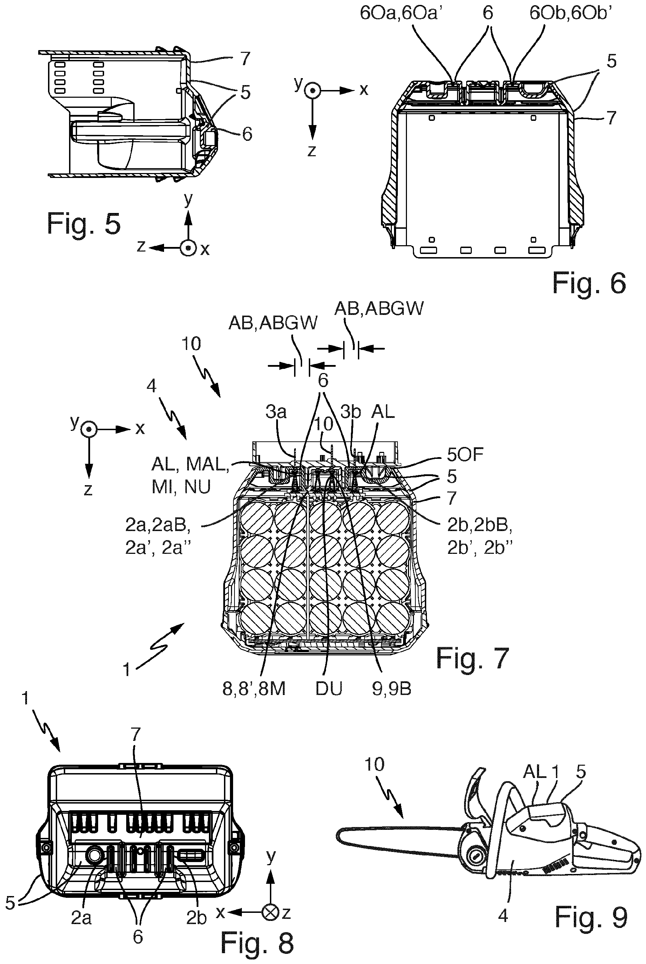

Fig 7 und 9 zeigen ein erfindungsgemäßes System 10. Das System 10 weist einen erfindungsgemäßen Akkupack 1, wie in Fig. 8 gezeigt, und ein elektrisch angetriebenes Bearbeitungsgerät 4 auf.

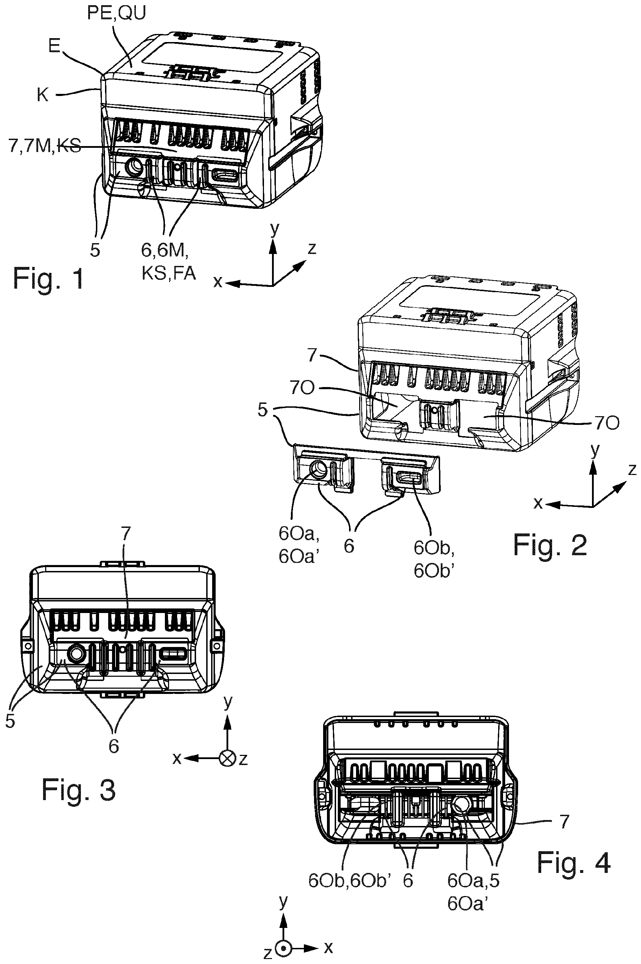

Der Akkupack 1 weist mehrere, insbesondere zwei, Packleistungskontakte 2a, 2b und ein Packgehäuse 5 auf, wie in Fig. 1 bis 6 gezeigt. Die Packleistungskontakte 2a, 2b sind mit Berührungsstellen 2aB, 2bB zur benutzerlösbaren Berührung von, insbesondere zwei, Geräteleistungskontakten 3a, 3b des Bearbeitungsgeräts 4 zur Versorgung des Bearbeitungsgeräts 4 mit elektrischer Antriebsleistung AL von dem Akkupack 1 ausgebildet, insbesondere berühren und versorgen somit. Das Packgehäuse 5 weist mindestens, insbesondere nur, eine, insbesondere einzige, Flammschutz-Gehäusekomponente 6 und mindestens eine Aufprallschutz-Gehäusekomponente 7 auf, insbesondere zwei Aufprallschutz-Gehäusekomponenten 7. Die mindestens eine Flammschutz-Gehäusekomponente 6 weist mindestens, insbesondere nur, ein, insbesondere einziges, Flammschutz-Material 6M zum Flammschutz des Akkupacks 1 auf. Die mindestens eine Aufprallschutz-Gehäusekomponente 7 weist mindestens ein von dem Flammschutz-Material 6M verschiedenes Aufprallschutz-Material 7M zum Aufprallschutz des Akkupacks 1 auf. Die Berührungsstellen 2aB, 2bB sind im Bereich der mindestens einen Flammschutz-Gehäusekomponente 6 und nicht der mindestens einen Aufprallschutz-Gehäusekomponente 7 angeordnet.

In alternativen Ausführungsbeispielen kann das Packgehäuse mehrere, insbesondere zwei, Flammschutz-Gehäusekomponenten aufweisen. Zusätzlich oder alternativ kann das Packgehäuse in alternativen Ausführungsbeispielen nur eine einzige Aufprallschutz-Gehäusekomponente oder mindestens drei Aufprallschutz-Gehäusekomponenten aufweisen.

In dem gezeigten Ausführungsbeispiel sind die Aufprallschutz-Gehäusekomponenten 7 ein Gehäusebehälter, insbesondere mit fünf Wandungen, und ein Gehäusedeckel, insbesondere mit einer Wandung, insbesondere offen bzw. nicht durcheinander verschlossen, wie in Fig. 1 bis 6 gezeigt, oder durcheinander verschlossen, wie in Fig. 7 und 8 gezeigt.

Im Detail sind die Packleistungskontakte 2a, 2b Steckverbinder 2a', 2b', insbesondere Tulpen 2a", 2b". Insbesondere definieren die Tulpen 2a", 2b" die Berührungsstellen 2aB, 2bB.

Des Weiteren weist die mindestens eine Flammschutz-Gehäusekomponente 6 mindestens eine Durchführungsaussparung 6Oa, 6Ob, insbesondere zwei Durchführungsaussparungen 6Oa, 6Ob, insbesondere Schlitze 6Oa', 6Ob', zur Durchführung der Packleistungskontakte und/oder der Geräteleistungskontakte 3a, 3b zur Berührung auf, insbesondere sind die Geräteleistungskontakte 3a, 3b durchgeführt. Insbesondere sind die Berührungsstellen 2aB, 2bB, insbesondere die Packleistungskontakte 2a, 2b, in dem Packgehäuse 5 hinter der mindestens einen Durchführungsaussparung 6Oa, 6Ob angeordnet, insbesondere in einer, insbesondere axialen, Richtung z von außen nach innen.

Außerdem ist mindestens ein kleinster Abstand AB entlang einer Oberfläche 5OF des Packgehäuses 5, insbesondere in radialen Richtungen x, y, von den Berührungsstellen 2aB, 2bB, insbesondere den Packleistungskontakten 2a, 2b, zu der mindestens einen Aufprallschutz-Gehäusekomponente 7 größer als zu der mindestens einen Flammschutz-Gehäusekomponente 6, insbesondere auf einer Hinter- bzw. Rückseite des Packgehäuses 5, insbesondere des Gehäusebehälters. Insbesondere sind die Berührungsstellen 2aB, 2bB, insbesondere die Packleistungskontakte 2a, 2b, insbesondere vollständig, umgeben durch die mindestens eine Flammschutz-Gehäusekomponente 6 angeordnet, insbesondere auf der Hinterseite. Zusätzlich oder alternativ ist die mindestens eine Flammschutz-Gehäusekomponente 6, insbesondere vollständig, umgeben durch die mindestens eine Aufprallschutz-Gehäusekomponente 7 angeordnet, insbesondere auf der Hinterseite.

In dem gezeigten Ausführungsbeispiel sind die radialen Richtungen x, y nicht-parallel, insbesondere orthogonal, zu der axialen Richtung z.

Weiter sind die Berührungsstellen 2aB, 2bB maximal mit einem Abstandsgrenzwert ABGW beabstandet zu der mindestens einen Flammschutz-Gehäusekomponente 6 angeordnet. Zusätzlich oder alternativ sind die Berührungsstellen 2aB, 2bB minimal mit mehr als einem, insbesondere dem, Abstandsgrenzwert ABGW beabstandet zu der mindestens einen Aufprallschutz-Gehäusekomponente 7 angeordnet. Insbesondere ist der Abstandsgrenzwert ABGW minimal 1 mm und/oder maximal 5 mm, insbesondere 3 mm.

Zudem erstreckt die mindestens eine Flammschutz-Gehäusekomponente 6 sich bis zu einer, insbesondere der, Oberfläche 5OF des Packgehäuses 5, insbesondere entgegen einer, insbesondere der und/oder axialen, Richtung z von innen nach außen.

Des Weiteren weist das Packgehäuse 5, insbesondere die mindestens eine Aufprallschutz-Gehäusekomponente 7, mindestens eine Kante K, insbesondere zwölf Kanten K, und/oder mindestens eine Ecke E, insbesondere acht Ecken E, insbesondere die Form eines Parallelepipeds PE, insbesondere eines Quaders QU, auf. Die mindestens eine Flammschutz-Gehäusekomponente 6 erstreckt sich nicht bis zu der mindestens einen Kante K und/oder der mindestens einen Ecke E, insbesondere entlang einer, insbesondere der, Oberfläche 5 OF des Packgehäuses 5.

In dem gezeigten Ausführungsbeispiel weist das Packgehäuse 5, insbesondere die mindestens eine Aufprallschutz-Gehäusekomponente 7, eine Höhe, insbesondere in der Richtung y, von minimal 2,5 Zentimeter (cm) und/oder maximal 10 cm, insbesondere 5 cm, und/oder eine Breite, insbesondere in der Richtung x, von minimal 5 cm und/oder maximal 20 cm, insbesondere 10 cm, und/oder eine Tiefe, insbesondere in der Richtung z, von minimal 7,5 cm und/oder maximal 30 cm, insbesondere 15 cm, auf.

Außerdem weist die mindestens eine Flammschutz-Gehäusekomponente 6 eine Klassifizierung von UL94V-0 auf.

Weiter besteht die mindestens eine Flammschutz-Gehäusekomponente 6 teilweise oder vollständig aus Kunststoff KS, insbesondere PA6/6 (GFO bis 45), mit mindestens einem Flammschutz-Additiv FA. Zusätzlich oder alternativ besteht die mindestens eine Aufprallschutz-Gehäusekomponente 7 teilweise oder vollständig aus, insbesondere dem, Kunststoff KS mit weniger oder keinem Flammschutz-Additiv.

In dem gezeigten Ausführungsbeispiel weist die mindestens eine Aufprallschutz-Gehäusekomponente 7, insbesondere der Gehäusebehälter, insbesondere auf seiner Hinterseite, mindestens eine Aufnahmeaussparung 7O, insbesondere zwei Aufnahmeaussparungen 7O, zur Aufnahme, insbesondere bei offenem bzw. nicht verschlossenem Gehäusebehälter, und insbesondere zur formschlüssigen Verbindung, der mindestens einen Flammschutz-Gehäusekomponente 6 auf, insbesondere entgegen einer, insbesondere der und/oder axialen, Richtung z von innen nach außen. Insbesondere ist die mindestens eine Flammschutz-Gehäusekomponente 6 aufgenommen und formschlüssig verbunden.

In alternativen Ausführungsbeispielen können die mindestens eine Flammschutz-Gehäusekomponente und die mindestens eine Aufprallschutz-Gehäusekomponente Mehrkomponenten-Spritzgieß-Komponenten, und insbesondere stoffschlüssig verbunden, sein.

Zudem weist der Akkupack 1 mindestens, insbesondere nur, einen, insbesondere einzigen, Träger 8, insbesondere eine Leiterplatte 8', auf. Der mindestens eine Träger 8 trägt die Packleistungskontakte 2a, 2b. Insbesondere weist der mindestens eine Träger 8 mindestens ein, insbesondere das, Flammschutz-Material 8M zum Flammschutz des Akkupacks 1 auf und/oder ist verschieden von dem Packgehäuse 5 und/oder ist in dem Packgehäuse 5 angeordnet und/oder ist mit dem Packgehäuse 5 formschlüssig verbunden.

Des Weiteren ist der Akkupack 1 zu der Versorgung mit einem maximalen Antriebsstrom MI von minimal 200 mA, insbesondere minimal 1 A, und/oder maximal 1000 A, insbesondere maximal 200 A, insbesondere 55 A, ausgebildet, insbesondere versorgt. Zusätzlich oder alternativ ist der Akkupack 1 zu der Versorgung mit einer Nennspannung NU von minimal 9 V, insbesondere minimal 18V, und/oder maximal 100 V, insbesondere maximal 72 V, insbesondere 36 V, ausgebildet, insbesondere versorgt. Weiter zusätzlich oder alternativ ist der Akkupack 1 zu der Versorgung mit einer maximalen elektrischen Antriebsleistung MAL von minimal 200 W, insbesondere minimal 1 kW, und/oder maximal 10 kW, insbesondere maximal 5 kW, insbesondere 2 kW, ausgebildet, insbesondere versorgt.

Außerdem weist der Akkupack 1 mindestens einen Packdatenkontakt 9 auf. Der mindestens eine Packdatenkontakt 9 ist mit mindestens einer Datenberührungsstelle 9B zur benutzerlösbaren Berührung von mindestens einem Gerätedatenkontakt 10 des Bearbeitungsgeräts 4 zur Datenübertragung DU zwischen dem Bearbeitungsgerät 4 und dem Akkupack 1 ausgebildet, insbesondere berührt und überträgt somit. Insbesondere ist die mindestens eine Datenberührungsstelle 9B im Bereich der mindestens einen Aufprallschutz-Gehäusekomponente 7 und nicht der mindestens einen Flammschutz-Gehäusekomponente 6 angeordnet.

In alternativen Ausführungsbeispielen kann die mindestens eine Datenberührungsstelle im Bereich der mindestens einen Flammschutz-Gehäusekomponente und/oder nicht der mindestens einen Aufprallschutz-Gehäusekomponente angeordnet sein.

Das erfindungsgemäße Verfahren zur Herstellung des Akkupacks 1 weist die Schritte auf:
- Herstellen der mindestens einen Flammschutz-Gehäusekomponente 6 und der mindestens einen Aufprallschutz-Gehäusekomponente 7, insbesondere mittels Spritzgießens, in alternativen Ausführungsbeispielen Mehrkomponenten-Spritzgießens, und
- Anordnen der Berührungsstellen 2aB, 2bB im Bereich der mindestens einen Flammschutz-Gehäusekomponente 6 und nicht der mindestens einen Aufprallschutz-Gehäusekomponente 7.

In dem gezeigten Ausführungsbeispiel werden und/oder sind die Packleistungskontakte 2a, 2b, insbesondere durch den Träger 8, in dem Packgehäuse 5 angeordnet, insbesondere bei offenem bzw. nicht verschlossenem Gehäusebehälter. Insbesondere zeitlich danach wird und/oder ist der Gehäusebehälter, insbesondere eine Vorderseite des Gehäusebehälters, durch den Gehäusedeckel verschlossen.

Wie die gezeigten und oben erläuterten Ausführungsbeispiele deutlich machen, stellt die Erfindung einen vorteilhaften Akkupack, ein vorteilhaftes System aufweisend den Akkupack und ein elektrisch angetriebenes Bearbeitungsgerät und ein vorteilhaftes Verfahren zur Herstellung des Akkupacks bereit, das jeweils verbesserte Eigenschaften aufweist.

## Patentansprüche

1. Akkupack (1), wobei der Akkupack (1) aufweist:
- mehrere Packleistungskontakte (2a, 2b), wobei die Packleistungskontakte (2a, 2b) mit Berührungsstellen (2aB, 2bB) zur benutzerlösbaren Berührung von Geräteleistungskontakten (3a, 3b) eines elektrisch angetriebenen Bearbeitungsgeräts (4) zur Versorgung des Bearbeitungsgeräts (4) mit elektrischer Antriebsleistung (AL) von dem Akkupack (1) ausgebildet sind, und
- ein Packgehäuse (5), wobei das Packgehäuse (5) mindestens eine Flammschutz-Gehäusekomponente (6) und mindestens eine Aufprallschutz-Gehäusekomponente (7) aufweist,
- wobei die mindestens eine Flammschutz-Gehäusekomponente (6) mindestens ein Flammschutz-Material (6M) zum Flammschutz des Akkupacks (1) aufweist,
- wobei die mindestens eine Aufprallschutz-Gehäusekomponente (7) mindestens ein von dem Flammschutz-Material (6M) verschiedenes Aufprallschutz-Material (7M) zum Aufprallschutz des Akkupacks (1) aufweist, und
- wobei die Berührungsstellen (2aB, 2bB) im Bereich der mindestens einen Flammschutz-Gehäusekomponente (6) und nicht der mindestens einen Aufprallschutz-Gehäusekomponente (7) angeordnet sind.

2. Akkupack (1) nach dem vorhergehenden Anspruch,
- wobei die Packleistungskontakte (2a, 2b) Steckverbinder (2a', 2b'), insbesondere Tulpen (2a", 2b"), sind,
- insbesondere wobei die Tulpen (2a", 2b") die Berührungsstellen (2aB, 2bB) definieren.

3. Akkupack (1) nach einem der vorhergehenden Ansprüche,
- wobei die mindestens eine Flammschutz-Gehäusekomponente (6) mindestens eine Durchführungsaussparung (6Oa, 6Ob), insbesondere Schlitze (6Oa', 6Ob'), zur Durchführung der Packleistungskontakte und/oder der Geräteleistungskontakte (3a, 3b) zur Berührung aufweist,
- insbesondere wobei die Berührungsstellen (2aB, 2bB), insbesondere die Packleistungskontakte (2a, 2b), in dem Packgehäuse (5) hinter der mindestens einen Durchführungsaussparung (6Oa, 6Ob) angeordnet sind, insbesondere in einer Richtung (z) von außen nach innen.

4. Akkupack (1) nach einem der vorhergehenden Ansprüche,
- wobei mindestens ein kleinster Abstand (AB) entlang einer Oberfläche (5OF) des Packgehäuses (5), insbesondere in radialen Richtungen (x, y), von den Berührungsstellen (2aB, 2bB), insbesondere den Packleistungskontakten (2a, 2b), zu der mindestens einen Aufprallschutz-Gehäusekomponente (7) größer ist als zu der mindestens einen Flammschutz-Gehäusekomponente (6),
- insbesondere wobei die Berührungsstellen (2aB, 2bB), insbesondere die Packleistungskontakte (2a, 2b), insbesondere vollständig, umgeben durch die mindestens eine Flammschutz-Gehäusekomponente (6) angeordnet sind, und/oder
- insbesondere wobei die mindestens eine Flammschutz-Gehäusekomponente (6), insbesondere vollständig, umgeben durch die mindestens eine Aufprallschutz-Gehäusekomponente (7) angeordnet ist.

5. Akkupack (1) nach einem der vorhergehenden Ansprüche,
- wobei die Berührungsstellen (2aB, 2bB) maximal mit einem Abstandsgrenzwert (ABGW) beabstandet zu der mindestens einen Flammschutz-Gehäusekomponente (6) angeordnet sind, und/oder
- wobei die Berührungsstellen (2aB, 2bB) minimal mit mehr als einem, insbesondere dem, Abstandsgrenzwert (ABGW) beabstandet zu der mindestens einen Aufprallschutz-Gehäusekomponente (7) angeordnet sind,
- insbesondere wobei der Abstandsgrenzwert (ABGW) minimal 1 mm und/oder maximal 5 mm, insbesondere 3 mm, ist.

6. Akkupack (1) nach einem der vorhergehenden Ansprüche,
- wobei die mindestens eine Flammschutz-Gehäusekomponente (6) sich bis zu einer Oberfläche (5OF) des Packgehäuses (5) erstreckt, insbesondere entgegen einer Richtung (z) von innen nach außen.

7. Akkupack (1) nach einem der vorhergehenden Ansprüche,
- wobei das Packgehäuse (5), insbesondere die mindestens eine Aufprallschutz-Gehäusekomponente (7), mindestens eine Kante (K) und/oder mindestens eine Ecke (E), insbesondere die Form eines Parallelepipeds (PE), insbesondere eines Quaders (QU), aufweist,
- wobei die mindestens eine Flammschutz-Gehäusekomponente (6) sich nicht bis zu der mindestens einen Kante (K) und/oder der mindestens einen Ecke (E) erstreckt, insbesondere entlang einer Oberfläche (5OF) des Packgehäuses (5).

8. Akkupack (1) nach einem der vorhergehenden Ansprüche,
- wobei die mindestens eine Flammschutz-Gehäusekomponente (6) eine Klassifizierung von UL94V-0 aufweist.

9. Akkupack (1) nach einem der vorhergehenden Ansprüche,
- wobei die mindestens eine Flammschutz-Gehäusekomponente (6) teilweise oder vollständig aus Kunststoff (KS), insbesondere PA6/6 (GFO bis 45), mit mindestens einem Flammschutz-Additiv (FA) besteht, und/oder
- wobei die mindestens eine Aufprallschutz-Gehäusekomponente (7) teilweise oder vollständig aus, insbesondere dem, Kunststoff (KS) mit weniger oder keinem Flammschutz-Additiv besteht.

10. Akkupack (1) nach einem der vorhergehenden Ansprüche,
- wobei die mindestens eine Aufprallschutz-Gehäusekomponente (7) mindestens eine Aufnahmeaussparung (7O) zur Aufnahme, und insbesondere zur formschlüssigen Verbindung, der mindestens einen Flammschutz-Gehäusekomponente (6) aufweist, insbesondere entgegen einer Richtung (z) von innen nach außen, oder
- wobei die mindestens eine Flammschutz-Gehäusekomponente und die mindestens eine Aufprallschutz-Gehäusekomponente Mehrkomponenten-Spritzgieß-Komponenten, und insbesondere stoffschlüssig verbunden, sind.

11. Akkupack (1) nach einem der vorhergehenden Ansprüche,
- wobei der Akkupack (1) mindestens einen Träger (8), insbesondere eine Leiterplatte (8'), aufweist, wobei der mindestens eine Träger (8) die Packleistungskontakte (2a, 2b) trägt, insbesondere wobei der mindestens eine Träger (8) mindestens ein Flammschutz-Material (8M) zum Flammschutz des Akkupacks (1) aufweist und/oder verschieden von dem Packgehäuse (5) ist und/oder in dem Packgehäuse (5) angeordnet ist und/oder mit dem Packgehäuse (5) formschlüssig verbunden ist.

12. Akkupack (1) nach einem der vorhergehenden Ansprüche,
- wobei der Akkupack (1) zu der Versorgung mit einem maximalen Antriebsstrom (MI) von minimal 200 mA, insbesondere minimal 1 A, und/oder maximal 1000 A, insbesondere maximal 200 A, insbesondere 55 A, ausgebildet ist, und/oder
- wobei der Akkupack (1) zu der Versorgung mit einer Nennspannung (NU) von minimal 9 V, insbesondere minimal 18V, und/oder maximal 100 V, insbesondere maximal 72 V, insbesondere 36 V, ausgebildet ist, und/oder
- wobei der Akkupack (1) zu der Versorgung mit einer maximalen elektrischen Antriebsleistung (MAL) von minimal 200 W, insbesondere minimal 1 kW, und/oder maximal 10 kW, insbesondere maximal 5 kW, insbesondere 2 kW, ausgebildet ist.

13. Akkupack (1) nach einem der vorhergehenden Ansprüche,
- wobei der Akkupack (1) mindestens einen Packdatenkontakt (9) aufweist, wobei der mindestens eine Packdatenkontakt (9) mit mindestens einer Datenberührungsstelle (9B) zur benutzerlösbaren Berührung von mindestens einem Gerätedatenkontakt (10) des Bearbeitungsgeräts (4) zur Datenübertragung (DU) zwischen dem Bearbeitungsgerät (4) und dem Akkupack (1) ausgebildet ist,
- insbesondere wobei die mindestens eine Datenberührungsstelle (9B) im Bereich der mindestens einen Aufprallschutz-Gehäusekomponente (7) und nicht der mindestens einen Flammschutz-Gehäusekomponente (6) angeordnet ist.

14. System (10), wobei das System (10) aufweist:
- den Akkupack (1) nach einem der vorhergehenden Ansprüche, und
- das elektrisch angetriebene Bearbeitungsgerät (4).

15. Verfahren zur Herstellung des Akkupacks (1) nach einem der Ansprüche 1 bis 13, insbesondere Anspruch 10, wobei das Verfahren die Schritte aufweist:
- Herstellen der mindestens einen Flammschutz-Gehäusekomponente (6) und der mindestens einen Aufprallschutz-Gehäusekomponente (7), insbesondere mittels Spritzgießens, insbesondere Mehrkomponenten-Spritzgießens, und
- Anordnen der Berührungsstellen (2aB, 2bB) im Bereich der mindestens einen Flammschutz-Gehäusekomponente (6) und nicht der mindestens einen Aufprallschutz-Gehäusekomponente (7).
